# EUROPEAN PATENT APPLICATION

(11) **EP 4 044 471 A1**
(43) Date of publication of application: **17.08.2022**
(21) Application number: 20884901.8
(22) Date of filing: 05.11.2020
(51) Int. Cl.: H04L 1/06, H04W 4/40

(54) **SIDELINK CSI REPORTING CONTROL METHOD, SIDELINK CSI REPORTING METHOD, AND RELATED DEVICES**

(30) Priority: 06.11.2019 CN 201911078551
(71) Applicant: Vivo Mobile Communication Co., Ltd., Dongguan, Guangdong 523863 (CN)
(72) Inventor: BAO, Wei, Dongguan, Guangdong 523863 (CN); YANG, Xiaodong, Dongguan, Guangdong 523863 (CN)
(74) Representative: Winter, Brandl - Partnerschaft mbB
(86) International application number: PCT/CN2020/126667
(87) International publication number: WO 2021/088910

(57) **Abstract**

This disclosure provides a method for controlling sidelink CSI reporting, a method for reporting sidelink CSI, and related devices. The method for controlling sidelink CSI reporting includes: transmitting a PC5 radio resource control RRC message to a receiving terminal of the sidelink transmission, where the PC5 radio resource control RRC message carries sidelink CSI configuration information; and receiving target CSI reported by the receiving terminal based on the sidelink CSI configuration information.

## Description

### CROSS-REFERENCE TO RELATED APPLICATIONS

This application claims priority to Chinese Patent Application No. 201911078551.9, filed in China on November 6, 2019, which is incorporated herein by reference in its entirety.

### TECHNICAL FIELD

This disclosure relates to the field of communications technologies, and in particular, to a method for controlling sidelink channel state information (Channel State Information) CSI reporting, a method for reporting sidelink CSI, and related devices.

### BACKGROUND

In the related art, V2X sidelink (sidelink) transmission is mainly for broadcast services and lacks support of PC5 radio resource control (Radio Resource Control, RRC) signaling, so that CSI reporting cannot be performed. As a result, link state information is not available and a transmission parameter cannot be selected according to actual link conditions, which is prone to problems such as waste of resources or transmission failure, resulting in low transmission efficiency of sidelink transmission.

### SUMMARY

Embodiments of this disclosure provide a method for controlling sidelink CSI reporting, a method for reporting sidelink CSI, and related devices, to resolve a problem of low sidelink transmission efficiency.

According to a first aspect, an embodiment of this disclosure provides a method for controlling sidelink channel state information CSI reporting, applied to a transmitting terminal of a sidelink transmission and including:
transmitting a PC5 radio resource control RRC message to a receiving terminal of the sidelink transmission, where the PC5 radio resource control RRC message carries sidelink CSI configuration information; and
receiving target CSI reported by the receiving terminal based on the sidelink CSI configuration information.

According to a second aspect, an embodiment of this disclosure further provides a method for reporting sidelink channel state information CSI, applied to a receiving terminal of a sidelink transmission and including:
receiving a PC5 radio resource control RRC message transmitted by a transmitting terminal of the sidelink transmission, where the PC5 radio resource control RRC message carries sidelink CSI configuration information; and
reporting target CSI to the transmitting terminal based on the sidelink CSI configuration information.

According to a third aspect, an embodiment of this disclosure further provides a method for controlling sidelink channel state information CSI reporting, applied to a network device and including:
transmitting sidelink CSI configuration information to a transmitting terminal of a sidelink transmission; where
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

According to a fourth aspect, an embodiment of this disclosure further provides a terminal, where the terminal is a transmitting terminal of a sidelink transmission and includes:
a first transmitting module, configured to transmit a PC5 radio resource control RRC message to a receiving terminal of the sidelink transmission, where the PC5 radio resource control RRC message carries sidelink channel state information CSI configuration information; and
a first receiving module, configured to receive target CSI reported by the receiving terminal based on the sidelink CSI configuration information.

According to a fifth aspect, an embodiment of this disclosure further provides a terminal, where the terminal is a receiving terminal of a sidelink transmission and includes:
a second receiving module, configured to receive a PC5 radio resource control RRC message transmitted by a transmitting terminal of the sidelink transmission, where the PC5 radio resource control RRC message carries sidelink channel state information CSI configuration information; and
a second transmitting module, configured to report target CSI to the transmitting terminal based on the sidelink CSI configuration information.

According to a sixth aspect, an embodiment of this disclosure further provides a network device, including:
a third transmitting module, configured to transmit sidelink channel state information CSI configuration information to a transmitting terminal of a sidelink transmission, where
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

According to a seventh aspect, an embodiment of this disclosure further provides a terminal, including a memory, a processor, and a program stored in the memory and capable of running on the processor, where when the program is executed by the processor, the steps of the foregoing method for controlling sidelink channel state information CSI reporting are implemented, or the steps of the foregoing method for reporting sidelink channel state information CSI are implemented.

According to an eighth aspect, an embodiment of this disclosure further provides a network device, including a memory, a processor, and a program stored in the memory and capable of running on the processor, where when the program is executed by the processor, the steps of the foregoing method for controlling sidelink channel state information CSI reporting are implemented.

According to a ninth aspect, an embodiment of this disclosure further provides a computer-readable storage medium, where the computer-readable storage medium stores a computer program, and when the computer program is executed by a processor, the steps of the foregoing method for controlling sidelink channel state information CSI reporting are implemented, or when the computer program is executed by a processor, the steps of the method for reporting sidelink channel state information CSI are implemented.

In this embodiment of this disclosure, a transmitting terminal transmits sidelink CSI configuration information to a receiving terminal by using a PC5 RRC message, thereby configuring sidelink CSI reporting, and the receiving terminal can report target CSI to the transmitting terminal based on the CSI configuration information. In this way, the sidelink can support CSI reporting, so that a transmission parameter can be selected according to actual link conditions, thereby reducing resource overheads while improving transmission success rate. Therefore, the embodiments of this disclosure improve sidelink transmission efficiency.

### BRIEF DESCRIPTION OF DRAWINGS

To describe the technical solutions in the embodiments of this disclosure more clearly, the following briefly introduces the accompanying drawings required for describing the embodiments of this disclosure. Apparently, the accompanying drawings in the following description show merely some embodiments of this disclosure, and a person of ordinary skill in the art may still derive other drawings from these accompanying drawings without creative efforts.
FIG. 1 is a structural diagram of a network system to which an embodiment of this disclosure may be applied;
FIG. 2 is a first flowchart of a method for controlling sidelink CSI reporting according to an embodiment of this disclosure;
FIG. 3 is a flowchart of a method for reporting sidelink CSI according to an embodiment of this disclosure;
FIG. 4 is a second flowchart of a method for controlling sidelink CSI reporting according to an embodiment of this disclosure;
FIG. 5 is a first structural diagram of a terminal according to an embodiment of this disclosure;
FIG. 6 is a second structural diagram of a terminal according to an embodiment of this disclosure;
FIG. 7 is a structural diagram of a network device according to an embodiment of this disclosure;
FIG. 8 is a third structural diagram of a terminal according to an embodiment of this disclosure; and
FIG. 9 is a structural diagram of another network device according to an embodiment of this disclosure.

### DETAILED DESCRIPTION

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the protection scope of this disclosure.

Terms "include", "comprise" and any other variants thereof in the specification and claims of the application are intended to cover the non-exclusive inclusion. For example, a process, method, system, product, or device that includes a series of steps or units is not necessarily limited to those expressly listed steps or units, but may include other steps or units not expressly listed or inherent to such process, method, system, product, or device. In addition, the term "and/or" used in the specification and claims indicates at least one of connected objects. For example, A and/or B represents the following three cases: Only A exists, only B exists, and both A and B exist.

In the embodiments of this disclosure, words such as "an example" or "for example" are used to represent an example, an illustration, or a description. Any embodiment or design solution described as "an example" or "for example" in the embodiments of this disclosure should not be construed as being more preferred or advantageous than other embodiments or design solutions. To be precise, the terms such as "example" or "for example" are intended to present a related concept in a specific manner.

The following describes the embodiments of this disclosure with reference to the accompanying drawings. This disclosure provides a method for controlling sidelink CSI reporting, a method for reporting sidelink CSI, and related devices, which may be applied to a wireless communications system. The wireless communications system may be a 5G system, or an evolved long term evolution (Evolved Long Term Evolution, eLTE) system, or a later evolved communications system.

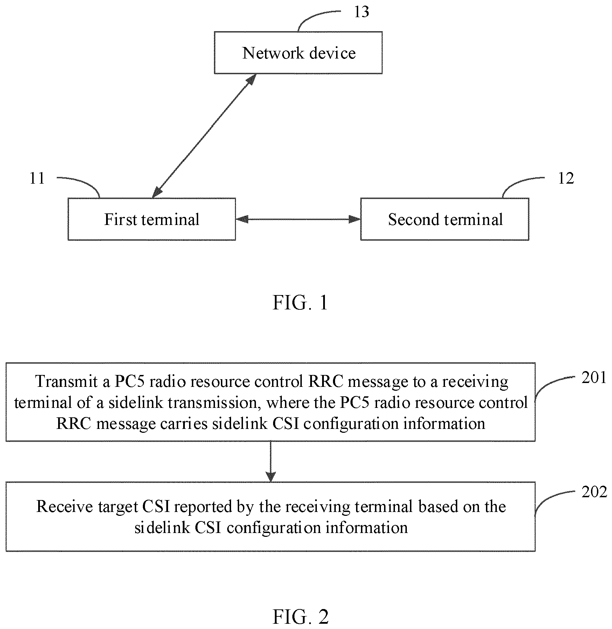

FIG. 1 is a structural diagram of a network system to which an embodiment of this disclosure may be applied. As shown in FIG. 1, the network system includes a first terminal 11, a second terminal 12, and a network device 13. The first terminal 11 and the second terminal 12 each may be user equipment or another terminal-side device, for example a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device). It should be noted that the first terminal 11 and the second terminal 12 are not limited to any specific type in the embodiments of this disclosure. The network device may be a 5G base station, or a base station of a later version, or a base station in another communications system, or is referred to as a NodeB, or an evolved NodeB, or a transmission and reception point (Transmission Reception Point, TRP), or an access point (Access Point, AP), or another term in the art, provided that a same technical effect is achieved. The network device is not limited to a specific technical term. In addition, the network device may be a master node (Master Node, MN) or a secondary node (Secondary Node, SN). It should be noted that the 5G base station is used merely as an example in this embodiment of this disclosure, rather than limiting a specific type of the network device.

Optionally, in FIG. 1, for a sidelink transmission from the first terminal 12 to the second terminal 13, the first terminal 11 is a transmitting terminal of the sidelink transmission, and the second terminal 12 is a receiving terminal of the sidelink transmission. Certainly, in another sidelink transmission, the first terminal 12 may also serve as a receiving terminal of the another sidelink transmission.

FIG. 2 is a flowchart of a method for controlling sidelink channel state information CSI reporting according to an embodiment of this disclosure. The method is applied to a transmitting terminal of a sidelink transmission. As shown in FIG. 2, the method includes the following steps:
Step 201. Transmit a PC5 radio resource control RRC message to a receiving terminal of the sidelink transmission, where the PC5 radio resource control RRC message carries sidelink CSI configuration information; and
Step 202. Receive target CSI reported by the receiving terminal based on the sidelink CSI configuration information.

In this embodiment of this disclosure, in the sidelink transmission, a resource for transmission may be scheduled and allocated by a network device, or a resource may be autonomously selected by a transmitting terminal. In a sidelink transmission, the transmitting terminal determines a transmission parameter and transmits data to the receiving terminal, where the data may carry a reference signal; the receiving terminal can report a measurement result of the reference signal and other CSI to the transmitting terminal as target CSI; and the transmitting terminal may better adjust the transmission parameter according to the reported target CSI, thereby improving transmission success rate and resource efficiency.

The receiving terminal may report the target CSI periodically, semi-persistently, or aperiodically, which is not further limited herein.

In a PC5 connection, PC5 RRC connection establishment and state maintenance processes are not maintained as strictly as the maintenance on a Uu interface, and currently a PC5 signaling process is mainly used for capability interaction and information configuration. Therefore, in this embodiment, signaling suitable for carrying CSI configuration information may be PC5 RRC configuration or reconfiguration signaling. It should be understood that the CSI configuration information may be separately transmitted, or may be transmitted together with other configurations, which is not further limited herein.

Optionally, the sidelink CSI configuration information includes at least one of the following:
CSI report content, for example, a channel quality indicator (Channel quality indicator, CQI) and a precoding matrix indicator (Precoding matrix indicator, PMI);
a CSI reporting method, for example, periodic reporting, semi-persistent reporting, and aperiodic reporting;
a CSI reporting quantity, for example, a reference signal granularity for measurement, including a wideband, a narrowband, and a plurality of measurement values; and
a resource location for CSI reporting, if the reporting is periodic reporting or semi-persistent reporting, consistent reporting period and offset may make the receiving terminal be pre-allocated with a specified reporting resource for the receiving terminal to directly use the resource for reporting, thereby avoiding processes such as resource request and sensing (sensing).

In this embodiment of this disclosure, a transmitting terminal transmits sidelink CSI configuration information to a receiving terminal by using a PC5 RRC message, thereby configuring sidelink CSI reporting, and the receiving terminal can report target CSI to the transmitting terminal based on the CSI configuration information. In this way, the sidelink can support CSI reporting, so that a transmission parameter can be selected according to actual link conditions, thereby reducing resource overheads while improving transmission success rate. Therefore, this embodiment of this disclosure improves sidelink transmission efficiency.

Optionally, the CSI configuration information may be determined in various manners, for example, may be defined by a protocol, or determined according to pre-configured information, or may be directly configured by a network device. In other words, in this embodiment in this disclosure, before the step 201 is performed, the method further includes:
determining the sidelink CSI configuration information according to pre-configured information or protocol definition; or
receiving the sidelink CSI configuration information transmitted by a network device.

In an embodiment, the pre-configured information may be a rule or strategy for determining the sidelink CSI configuration information, which specifically may be obtained through transmission at a service layer, or may be obtained by the transmitting terminal in a connected state. In another embodiment, the pre-configured information may alternatively be a CSI configuration that is obtained by the transmitting terminal in a connected state and that is used after disconnection. In another embodiment, when protocol definition is used, a rule or strategy for determining the sidelink CSI configuration information can be defined, or the sidelink CSI configuration information may be directly defined through a protocol. When the pre-configured information or the configuration information defined by a protocol is used as a rule or strategy for determining the sidelink CSI configuration information, the transmitting terminal can determine the sidelink CSI configuration information based on its own algorithm according to the rule or strategy.

It should be understood that the network device is a home network device of the transmitting terminal, that is, a network device currently accessed by the transmitting terminal. Because the sidelink CSI configuration information may be determined according to the pre-configured information and the protocol definition, the sidelink CSI configuration information can be applied to a transmitting terminal in a disconnected state or a transmitting terminal in an idle (Idle) state or inactive (inactive) state. Certainly, the transmitting terminal in the idle (Idle) state or inactive (inactive) state may alternatively enter a connected (Connected) state and then receive the sidelink CSI configuration information transmitted by the network device, thereby improving flexibility of determining, by the transmitting terminal, the sidelink CSI configuration information.

Optionally, the manner in which the network device transmits the sidelink CSI configuration information may be set according to an actual need. In an optional embodiment, the network device may transmit the sidelink CSI configuration information by using dedicated radio resource control RRC signaling or system information block SIB. In other words, the receiving the sidelink CSI configuration information transmitted by a network device includes: receiving the sidelink CSI configuration information transmitted by the network device by using dedicated radio resource control RRC signaling or system information block SIB.

It should be noted that when transmitting the sidelink CSI configuration information by using the SIB, the network device may transmit different CSI configuration information, for example, specifically may transmit a correspondence between CSI configurations, services, and resources, and the transmitting terminal may select proper sidelink CSI configuration information according to its own condition.

Further, in an optional embodiment, after step 202, the method further includes:
forwarding the target CSI on a target resource to a network device based on a Uu interface transmission parameter configuration transmitted by the network device.

In this embodiment of this disclosure, when a resource for sidelink transmission is scheduled by the network device, the network device may transmit a Uu interface transmission parameter configuration to the transmitting terminal, where the Uu interface transmission parameter configuration is used by the transmitting terminal to report a target parameter for the target CSI to the network device. In this case, after receiving the target CSI, the network device may forward the target CSI on the target resource to the network device based on the Uu interface transmission parameter configuration. Specifically, the transmitting terminal may multiplex and report CSIs reported by a plurality of receiving terminals, or may separately report CSI reported by each receiving terminal, which is not further limited herein.

The target resource may be any one of the following:
a periodically pre-allocated resource;
a resource indicated by the network device by using first control signaling, where the first control signaling is layer-1 (LI) signaling or medium access control (Medium Access Control, MAC) signaling; and
a resource for an uplink scheduling request.

Further, when the target CSI reported by the receiving terminal is semi-persistent reporting or aperiodic reporting, the transmitting terminal may also control reporting of the receiving terminal by transmitting control signaling to the receiving terminal. Specifically, in this embodiment, before the step 201, the method further includes:
transmitting second control signaling to the receiving terminal, where the second control signaling is used to indicate the receiving terminal to report the target CSI.

Optionally, in this embodiment, the second control signaling may be MAC signaling.

In an optional embodiment, when the receiving terminal reports the target CSI by using a semi-persistent reporting method, the second control signaling includes at least one of the following:
first indication information for distinguishing different semi-persistent reports;
second indication information for distinguishing sidelinks;
a reported measurement range; and
a semi-persistent configuration identifier.

Optionally, for the first indication information, a different logical channel identifier (Logical Channel Identifier, LCID) may be used in a subheader (subheader) to distinguish activation/deactivation indication of a different semi-persistent report, or a different value in medium access control control element payload (MAC CE payload) field may be used to distinguish a different semi-persistent reporting indication.

The second indication information may be a sidelink link identifier (sidelink link ID), a cast type (cast type), a destination identifier (destination ID), and the like.

The measurement range may specifically refer to a cell, a frequency, a bandwidth part (Bandwidth Part, BWP), a resource pool, and the like.

For the semi-persistent configuration identifier, for example, if five semi-persistent reports are configured in the RRC signaling, five bits may be used to correspond to these five sets of configurations respectively, with value 1 of a corresponding bit for an activated state and value 0 for a deactivated state.

In another optional embodiment, when the receiving terminal reports the target CSI by using an aperiodic triggering reporting method, the second control signaling includes at least one of the following:
second indication information for distinguishing sidelinks;
a reported measurement range; and
third indication information for distinguishing different aperiodic triggering state entries.

For the third indication information, for example, in combination with RRC signaling, different code points are considered to indicate specific triggering information.

It should be understood that the second control signaling may be determined by the transmitting terminal itself, or may be determined by the network device. In other words, for aperiodic reporting and semi-persistent reporting performed by the receiving terminal, specific reporting may be controlled by the transmitting terminal, or may be controlled by a home network device of the transmitting terminal. For example, when the specific reporting is controlled by the network device, the transmitting second control signaling to the receiving terminal includes:
receiving second control signaling transmitted by the network device; and
forwarding the second control signaling to the receiving terminal.

Optionally, when the network device transmits the second control signaling, the second control signaling may be transmitted through L1 or MAC.

Further, the sidelink CSI configuration information may include a periodic reporting resource, and the periodic reporting resource is used for periodic CSI reporting or semi-persistent CSI reporting.

It should be understood that in this embodiment of this disclosure, in a case that the sidelink CSI configuration information received by the transmitting terminal has been transmitted by the network device by using a SIB message, because the sidelink CSI configuration information is a public configuration, all terminals may read a same configuration. If both the period and offset are fixed, interference is caused, and a specified manner may be used to shift the offset, so that different receiving terminals can perform CSI reporting in different locations to avoid mutual interference. Specifically, the offset may be randomly selected. For example, the offset may be selected based on a terminal location, or may be selected based on a terminal identifier.

In an optional embodiment, the target CSI may include:
second indication information for distinguishing sidelinks;
a reported measurement range; and
reported CSI content.

The reported CSI content may include a coding value of a CQI result, and the like.

It should be noted that in the foregoing embodiment, the sidelink CSI configuration information is transmitted by the transmitting terminal to the receiving terminal. In other embodiments, the sidelink CSI configuration information may alternatively be directly transmitted by the network device to the receiving terminal. Specifically, an embodiment of this disclosure further provides a method for controlling sidelink channel state information CSI reporting, applied to a transmitting terminal of a sidelink transmission and including:
in a case that a receiving terminal receiving the sidelink transmission has received sidelink CSI configuration information transmitted by a network device, receiving target configuration information transmitted by the receiving terminal, where the target configuration information is part of the sidelink CSI configuration information, and the target configuration information is used to determine that the receiving terminal supports CSI reporting; and
receiving target CSI reported by the receiving terminal based on the sidelink CSI configuration information.

In an optional embodiment, the target configuration information carries a periodic reporting resource, and the periodic reporting resource is used for periodic CSI reporting or semi-persistent CSI reporting.

Optionally, in a case that the transmitting terminal has determined CSI report content and a reporting method, after receiving the target configuration information transmitted by the receiving terminal, the CSI report content and the reporting method may be transmitted to the receiving terminal. If periodic or semi-persistent reporting is required, the receiving terminal needs to make a request or reservation for a corresponding periodic resource or semi-persistent resource, and feeds back completion signaling to the transmitting terminal only after the request or reservation succeeds. Optionally, a resource location may also be notified. The request or reservation for a periodic resource or semi-persistent resource may be a request or reservation made by the receiving terminal by initiating a request to its own home network device and requesting for a periodic resource or semi-persistent resource corresponding to the reporting. After the home network device has agreed and configured the resource for the receiving terminal, the receiving terminal UE feeds back a success message and/or a resource location to the transmitting terminal.

Correspondingly, in this embodiment, the behavior of the receiving terminal includes the following steps:
receiving the sidelink CSI configuration information transmitted by the network device;
transmitting target configuration information to the transmitting terminal of the sidelink transmission, where the target configuration information is part of the sidelink CSI configuration information, and the target configuration information is used to determine that the receiving terminal supports CSI reporting; and
reporting target CSI to the transmitting terminal based on the sidelink CSI configuration information.

In this embodiment of this disclosure, the receiving terminal receives the sidelink CSI configuration information transmitted by the network device, and transmits, to the transmitting terminal, part of the configuration information that is used to determine that the receiving terminal supports CSI reporting. In this way, the sidelink can support CSI reporting, so that a transmission parameter can be selected according to actual link conditions, thereby reducing resource overheads while improving transmission success rate. Therefore, this embodiment of this disclosure improves sidelink transmission efficiency.

To better understand this disclosure, the following describes an implementation process of this disclosure in detail based on different implementation solutions.

Specifically, in a sidelink link, data transmission is performed between terminals. In one data transmission, there is a transmitting terminal and a receiving terminal. The transmitting terminal determines a transmission parameter and transmits data to the receiving terminal. The data may carry a reference signal, the receiving terminal can report a measurement result of the reference signal and other CSI to the transmitting terminal as target CSI, and the transmitting terminal may better adjust the transmission parameter according to the reported target CSI, thereby improving transmission success rate and resource efficiency. It should be noted that in a bidirectional service, two terminals both have data to transmit, and therefore the two terminals each are both a transmitting terminal and a receiving terminal, but for a unidirectional transmission, the transmitting terminal and the receiving terminal are fixed. This embodiment uses the unidirectional transmission as an example to describe configuration and execution processes of CSI reporting. It should be noted that CSI reporting described in the following solution 1 and solution 2 may be understood as sidelink CSI reporting, and CSI configuration may be understood as sidelink CSI configuration.

Solution 1. The transmitting terminal transmits CSI configuration information to the receiving terminal by using PC5 RRC signaling.

In a PC5 connection, PC5 RRC connection establishment and state maintenance processes are not maintained as strictly as the maintenance on a Uu interface, and currently a PC5 signaling process is mainly used for capability interaction and information configuration. The most suitable signaling for carrying a CSI configuration is PC5 RRC configuration or reconfiguration signaling. Generally, CSI reporting is required only when at least one sidelink data radio bearer (Sidelink Data Radio Bearer, Sidelink DRB) connection has been established. Therefore, the CSI configuration information may be transmitted together with a sidelink DRB configuration or an additional message, and certainly may be transmitted separately.

The transmitting terminal UE better knows a service type and a resource pool, so that it is more reasonable for the transmitting terminal UE to configure the CSI information to the receiving terminal UE.

The CSI configuration information of the transmitting terminal UE includes the following content or a combination thereof:
an aperiodic triggering state information list;
content corresponding to a report;
frequency information of a CSI measurement resource, for example, a wideband, a narrowband, a measurement range, and the number of measurements. For sidelink, there are also some special considerations, for example, which resource pool the measurement is performed on, what bandwidth granularity the measurement is performed at in the resource pool, and how many measurement quantities are formed; and
a reporting method, for example, periodic reporting, semi-persistent reporting, and aperiodic reporting.

For periodic reporting, generally a period length and an offset are carried, and optionally a pre-allocated resource configuration may be carried in the report, where the resource matches with the period length and offset of periodic reporting.

Semi-persistent reporting is similar to periodic reporting, and the period length and offset of the reporting also need to be configured. An optional matching periodic resource is used for the reporting. A difference between semi-persistent reporting and periodic reporting is that semi-persistent reporting is generally in a deactivated state after configuration. When reporting is required, the transmitting terminal transmits dynamic signaling, such as MAC signaling or L1 signaling, to the receiving terminal to activate semi-persistent reporting, which may be deactivated later when no longer needed. In contrast, periodic reporting does not require dynamic signaling for control, and once configured, reporting will be performed periodically according to the period, until the configuration is cancelled.

For aperiodic reporting, a triggering method needs to be specified. One triggering method is that the transmitting terminal performs triggering by using dynamic signaling. For example, when reporting is required, MAC signaling or L1 signaling is transmitted to the receiving terminal to trigger the receiving terminal to report. Another triggering method is to set some triggering conditions. For example, it is defined that the triggering condition is satisfied if a specified threshold is met or if a threshold is met for a specified period of time, or the like, then the receiving terminal reports.

A typical implementation is that when the transmitting terminal establishes a first sidelink DRB, the transmitting terminal transmits the CSI configuration information to the receiving terminal, and then the receiving terminal reports based on the configuration information. Optionally, based on dynamic signaling control at the transmitting terminal, corresponding CSI reporting is performed (because part of a CSI reporting configuration needs to be further triggered by the transmitting terminal before reporting, such as aperiodic reporting and semi-persistent reporting dynamically indicated by the transmitting terminal).

Further, in Solution 1, a method to determine the CSI configuration information of the transmitting terminal UE may include any one of the following methods.

Method 1. A home base station of the transmitting terminal transmits the CSI configuration to the transmitting terminal through RRC dedicated signaling.

Method 1 is generally applicable to a transmitting terminal in a connected state. When a connected terminal needs to perform sidelink service transmission, the terminal generally reports its own quality of service QoS profile (QoS profile) to its home base station and requests for a configuration of a corresponding sidelink radio bearer (Sidelink Radio Bearer, SLRB), a mapping relationship between a quality of service flow (QoS flow) and the SLRB, and related transmission parameters, which may also include the CSI configuration. When receiving the request, the base station transmits a corresponding CSI configuration to the transmitting terminal according to service and resource conditions. It should be noted that if periodic or semi-persistent resources for CSI reporting are carried, because these resources are used by the receiving terminal, and the receiving terminal may be under control of another base station, it is necessary to consider coordination between interfaces of base stations for resource control, to ensure that different terminal pairs can use the CSI reporting resources efficiently without interference.

In particular, when semi-persistent resources for CSI reporting are configured, the semi-persistent CSI reporting needs to rely on the transmitting terminal to dynamically indicate to the receiving terminal when to activate/deactivate. Therefore, if such activation/deactivation is determined by the transmitting terminal itself, the base station needs to be informed of activation/deactivation information, so that the base station can know resource usage and occupancy in a real-time manner, so as to better perform other resource configurations. If such activation/deactivation is determined by the base station, for example, the base station schedules resources used by the transmitting terminal, after the base station transmits an indication to the transmitting terminal, the transmitting terminal notifies the receiving terminal of the indication, the receiving terminal also needs to transmit reporting information to the transmitting terminal, and then the transmitting terminal transmits the reporting information to the base station for subsequent scheduling decision made by the base station.

In another case, the transmitting terminal is disconnected. The disconnected transmitting terminal may obtain a CSI configuration according to some pre-configured methods. The pre-configured method may be transmitted through a service layer, or may be configured at factory, or pre-configured information that is obtained by the transmitting terminal in a connected state and that is used after disconnection.

Method 2. A home base station of the transmitting terminal transmits the CSI configuration to the transmitting terminal through a SIB message.

Method 2 is mainly applicable to a transmitting terminal in an idle/inactive state. Different CSI configurations and a correspondence between CSI configurations, services, and resources may be transmitted in a SIB message, and the transmitting terminal selects a proper configuration according to its own condition.

Because such a CSI configuration is a public configuration, all terminals may read a same configuration. If both the period and offset are fixed, interference is caused, and a specified manner may be used to shift the offset, so that different receiving terminals can perform CSI reporting in different locations to avoid mutual interference. Specifically, the offset may be randomly selected. For example, the offset may be selected based on a terminal location, or may be selected based on a terminal identifier.

Method 3. The transmitting terminal determines a CSI configuration by itself.

For Method 3, when the CSI configuration cannot be obtained from a network side, the transmitting terminal UE may alternatively determine the CSI configuration by itself based on its own algorithm.

It should be noted that because a lot of information is reported by CSI, if reporting content is indicated in detail in the reporting information, large overheads will be caused. Therefore, to-be-reported entries can be sorted and encoded in such a manner that only serial numbers are shown in the reporting content to replace specific entries. For example, in field 1, value 0 represents a CQI of subband 1, value 1 represents a CQI of subband 2, and so on, until value n-1 represents a CQI of subband n, and in field 2, value 0 represents CQI, and value 1 represents RSRP. Alternatively, different CQI tables may be looked up to encode specific content of the CQI. The CQI table is standard-based or predefined. RRC signaling only needs to configure which table is used for encoding, and then the encoded content is used to substitute for specific CQI measurement values, for example, 000 for CQI range r1-f2, 001 for CQI range r2-r3, and 010 for CQI range r3-r4.

Solution 2. The receiving terminal UE transmits, by using PC5 RRC signaling, part of the CSI configuration information to the transmitting terminal UE for confirmation.

Generally speaking, it is relatively straightforward for the transmitting terminal to determine the CSI configuration, which can also better consider service requirements and transmission requirements. However, CSI reporting is a behavior of the receiving terminal, and especially reporting resources used for the reporting may also be determined by the receiving terminal to some extent and fed back to the transmitting terminal.

The core of this solution is that the receiving terminal feeds back part of a CSI-related configuration to the transmitting terminal, which is feasible. For example, the transmitting terminal has determined the CSI report content and the reporting method and transmits the CSI report content and the reporting method to the receiving terminal. If periodic or semi-persistent reporting is required, the receiving terminal needs to make a request or reservation for a corresponding periodic resource or semi-persistent resource, and feeds back completion signaling to the transmitting terminal only after the request or reservation succeeds. Optionally, a resource location may also be notified. The request or reservation for a periodic resource or semi-persistent resource may be a request or reservation made by the receiving terminal by initiating a request to its own home base station and requesting for a periodic resource or semi-persistent resource corresponding to the reporting. After the home base station has agreed and configured the resource for the receiving terminal, the receiving terminal feeds back a success message and/or a resource location to the transmitting terminal.

For Solution 1 and Solution 2, CSI reporting is described in detail below. The CSI reporting is transmitted from the receiving terminal to the transmitting terminal, which may also be referred to as sidelink CSI reporting. Specifically, the CSI reporting generally includes periodic reporting, aperiodic reporting, and semi-persistent reporting.

For periodic reporting, the receiving terminal may trigger corresponding CSI reporting at a determined time according to a configured period and an offset. If the CSI reporting has a dedicated pre-configured resource, the pre-configured resource is used for the reporting. If no pre-configured resource is carried, the receiving terminal requests a network for a resource, or selects a resource from a resource pool by itself. The CSI reporting is performed by periodically using a resource, and therefore, the simplest and most efficient manner is to have a corresponding periodic resource (which means that the period and the offset are consistent). The most feasible manner is to request a network side for a dedicated periodic resource. After a grant for the periodic resource is obtained from the network side, resource location information may be transmitted to the transmitting terminal, so that the transmitting terminal can receive the CSI reporting in the location.

For the semi-persistent CSI reporting, a resource used for the reporting essentially also appears periodically, but the periodic resource also needs to be activated/deactivated with activation/deactivation of semi-persistent reporting. Although the reporting is semi-persistent, a resource may be reserved periodically, which is a manner to reduce overheads and shorten a delay. In another manner, with activation/deactivation of semi-persistent reporting, activation/deactivation of the resource may be indicated by the receiving terminal to the network according to the activation/deactivation indication of the transmitting terminal. During deactivation, the resource is not excluded for other purposes to improve efficiency.

In addition, it should be noted that for the periodic and semi-persistent CSI reporting, dynamic request or preemption may alternatively be used. The receiving terminal requests from its own base station, or monitors, or periodically uses the reserved resource, but a dynamic request is semi-persistently used. The periodic or semi-persistent reporting has strong time domain characteristics, and therefore, requesting or monitoring the periodic or semi-persistent reporting may be performed in advance to shorten a delay.

In this embodiment of this disclosure, a main purpose of a MAC CE for a sidelink interface is to report different CSI contents, indicate activation/deactivation of semi-persistent reporting, and trigger aperiodic reporting.

When being used for indicating activation/deactivation of semi-persistent reporting, the MAC CE may include the following contents or a combination thereof:
first indication information, for distinguishing different semi-persistent reports, a different LCID may be used in a subheader to indicate activation/deactivation of a different semi-persistent report, or a different value in MAC CE payload field may be used to distinguish a different semi-persistent report indication;
second indication information, for distinguishing sidelink links, for example, a sidelink link ID, a cast type, and a destination ID;
a reported measurement range, for example, a cell, a frequency, a BWP, and a resource pool; and
a semi-persistent configuration identifier, for example, if five semi-persistent reports are configured in the RRC signaling, five bits may be used to correspond to these five sets of configurations respectively, with value 1 of a corresponding bit for an activated state and value 0 for a deactivated state.

When being used for triggering of aperiodic reporting, the MAC CE may include the following content:
second indication information, for distinguishing sidelink links, for example, a sidelink link ID, a cast type, and a destination ID;
a reported measurement range, for example, a cell, a frequency, a BWP, and a resource pool; and
third indication information, for distinguishing different aperiodic triggering state entries, for example, in combination with RRC signaling, different code points are considered to indicate specific triggering information.

Further, in the foregoing embodiment, CSI configuration and reporting processes of the PC5 interface are described in detail. The transmitting terminal is likely to work in a resource allocation mode model, and therefore, a base station controls resources and scheduling of the transmitting terminal. In this case, after receiving CSI reporting information, the transmitting terminal needs to forward the CSI reporting information to its home base station for the home base station to better schedule sidelink resources. In other words, it is required that the transmitting terminal is configured to report a parameter for a sidelink CSI related report on a Uu interface, and perform reporting of the sidelink CSI on the Uu interface.

Because the sidelink CSI information is reported on the Uu interface, the most direct manner is to configure the CSI information by the home base station of the transmitting terminal. Generally, in this way, the home base station of the transmitting terminal controls the resource scheduling, so that the sidelink CSI configuration information is also determined by the base station. When the sidelink CSI configuration information is delivered to the transmitting terminal UE, sidelink CSI configuration information for the Uu interface may be carried, which mainly includes the following possible implementations.

For periodic CSI, if a resource is allocated periodically, reporting of CSI on the Uu interface should match reporting of the sidelink CSI, that is, the period is consistent, and a specific transmission and processing delay need to be considered for the offset. For example, on a sidelink interface, the receiving terminal reports the periodic CSI to the transmitting terminal at time t, and then the transmitting terminal UE forwards the periodic CSI to its home base station at time t+k, where k is a required receiving and processing delay. Alternatively, the sidelink CSI reporting on the Uu interface is completed by means of dynamic resource scheduling.

For semi-persistent CSI, the activation/deactivation instruction should be first transmitted from the home base station to the transmitting terminal, and then transmitted by the transmitting terminal to the receiving terminal. Therefore, the home base station clearly knows when to start/stop the semi-persistent CSI reporting. A resource for CSI reporting only needs to be configured on the Uu interface, and may be allocated periodically. Similarly, CSI reporting should match the semi-persistent reporting of sidelink CSI, that is, the period is consistent, and a specific transmission and processing delay need to be considered for the offset. For example, on a sidelink interface, the receiving terminal reports the periodic CSI to the transmitting terminal at time t, and then the transmitting terminal forwards the periodic CSI to its home base station at time t+k, where k is a required receiving and processing delay. Alternatively, the semi-persistent sidelink CSI reporting on the Uu interface is completed by means of dynamic resource scheduling.

For aperiodic CSI, an instruction to trigger aperiodic CSI reporting should be first transmitted from the home base station to the transmitting terminal, and then transmitted by the transmitting terminal to the receiving terminal. Therefore, the home base station clearly knows when to perform the aperiodic CSI reporting. A sidelink interface resource and a Uu interface resource may be reserved and transmitted to the transmitting terminal in the form of LI/MAC signaling, and then the transmitting terminal transmits the sidelink interface resource to the receiving terminal for aperiodic CSI reporting on the sidelink interface. After receiving the CSI report from the peer terminal, the transmitting terminal uses the Uu interface resource allocated before to forward the reported information to the base station.

When the transmitting terminal forwards the sidelink CSIs on the Uu interface, the sidelink CSIs reported from different receiving terminals can be multiplexed and transmitted. In this case, the sidelink link needs to be identified in the CSI information, for example one or a combination of the following: a sidelink link ID, a cast type, and a destination ID.

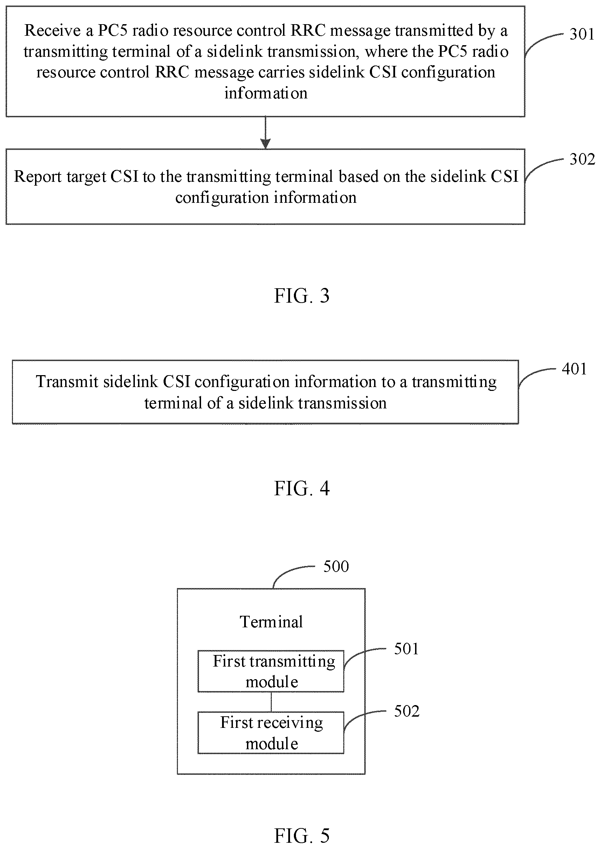

FIG. 3 is a flowchart of another method for reporting sidelink channel state information CSI according to an embodiment of this disclosure. The method is applied to a receiving terminal of a sidelink transmission. As shown in FIG. 3, the method includes the following steps:
Step 301. Receive a PC5 radio resource control RRC message transmitted by a transmitting terminal of the sidelink transmission, where the PC5 radio resource control RRC message carries sidelink CSI configuration information; and
Step 302. Report target CSI to the transmitting terminal based on the sidelink CSI configuration information.

Optionally, the method further includes:
receiving second control signaling transmitted by the transmitting terminal, where the second control signaling is used to indicate the receiving terminal to report the target CSI.

Optionally, the reporting target CSI to the transmitting terminal based on the sidelink CSI configuration information includes:
determining, based on the sidelink CSI configuration information, the reported target CSI; and
reporting the target CSI to the transmitting terminal based on an indication in the sidelink CSI configuration information or an indication in the second control signaling.

Optionally, the second control signaling is MAC signaling.

Optionally, the second control signaling includes at least one of the following:
first indication information for distinguishing different semi-persistent reports;
second indication information for distinguishing sidelinks;
a reported measurement range; and
a semi-persistent configuration identifier.

Optionally, the second control signaling includes at least one of the following:
second indication information for distinguishing sidelinks;
a reported measurement range; and
third indication information for distinguishing different aperiodic triggering state entries.

Optionally, the sidelink CSI configuration information includes a periodic reporting resource, and the periodic reporting resource is used for configuring periodic CSI reporting or semi-persistent CSI reporting.

Optionally, the target CSI is carried in a MAC CE.

Optionally, the target CSI includes:
second indication information for distinguishing sidelinks;
a reported measurement range; and
reported CSI content.

It should be noted that this embodiment serves as an implementation of the receiving terminal corresponding to the embodiment shown in FIG. 2. For specific implementations of this embodiment, reference may be made to related description of the embodiment shown in FIG. 2, with the same effects achieved. To avoid repetition, details are not described herein again.

FIG. 4 is a flowchart of another method for controlling sidelink channel state information CSI reporting according to an embodiment of this disclosure. The method is applied to a network device, where the network device is a home network device of the transmitting terminal. As shown in FIG. 4, the method includes the following step:

Step 401. Transmit sidelink CSI configuration information to a transmitting terminal of a sidelink transmission; where
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

Optionally, the sidelink CSI configuration information is carried in dedicated radio resource control RRC signaling or system information block SIB.

Optionally, the method further includes:
transmitting a Uu interface transmission parameter configuration to the transmitting terminal, where the Uu interface transmission parameter configuration is used by the transmitting terminal to report a target parameter for the target CSI to the network device.

Optionally, after the transmitting a Uu interface transmission parameter configuration to the transmitting terminal, the method further includes:
receiving the target CSI on a target resource forwarded by the transmitting terminal based on the Uu interface transmission parameter configuration.

Optionally, the target resource is any one of the following:
a periodically pre-allocated resource;
a resource for transmission of first control signaling indication by the network device by using layer-1 signaling or medium access control; and
a resource for an uplink scheduling request.

Optionally, the method further includes:
transmitting second control signaling to the transmitting terminal, where the second control signaling is used to indicate the receiving terminal to report the target CSI.

Optionally, the second control signaling is MAC signaling.

Optionally, the second control signaling includes at least one of the following:
first indication information for distinguishing different semi-persistent reports;
second indication information for distinguishing sidelinks;
a reported measurement range; and
a semi-persistent configuration identifier.

Optionally, the second control signaling includes at least one of the following:
second indication information for distinguishing sidelinks;
a reported measurement range; and
third indication information for distinguishing different aperiodic triggering state entries.

Optionally, the sidelink CSI configuration information includes a periodic reporting resource, and the periodic reporting resource is used for periodic CSI reporting or semi-persistent CSI reporting.

It should be noted that this embodiment serves as an implementation of the network device corresponding to the embodiment shown in FIG. 2. For specific implementations of this embodiment, reference may be made to related description of the embodiment shown in FIG. 2, with the same effects achieved. To avoid repetition, details are not described herein again.

FIG. 5 is a structural diagram of a terminal according to an embodiment of this disclosure, where the terminal is a transmitting terminal of a sidelink transmission. As shown in FIG. 5, the terminal 500 includes:
a first transmitting module 501, configured to transmit a PC5 radio resource control RRC message to a receiving terminal of the sidelink transmission, where the PC5 radio resource control RRC message carries sidelink channel state information CSI configuration information; and
a first receiving module 502, configured to receive target CSI reported by the receiving terminal based on the sidelink CSI configuration information.

Optionally, the terminal 500 further includes a first determining module, configured to determine the sidelink CSI configuration information according to pre-configured information or a protocol definition; or, the first receiving module 502 is further configured to receive the sidelink CSI configuration information transmitted by a network device.

Optionally, the first receiving module 502 is specifically configured to: receive the sidelink CSI configuration information transmitted by the network device by using dedicated radio resource control RRC signaling or system information block SIB.

Optionally, the first transmitting module 501 is further configured to: forward the target CSI on a target resource to a network device based on a Uu interface transmission parameter configuration transmitted by the network device.

Optionally, the target resource is any one of the following:
a periodically pre-allocated resource;
a resource indicated by the network device by using first control signaling, where the first control signaling is layer-1 signaling or medium access control MAC signaling; and
a resource for an uplink scheduling request.

Optionally, the first transmitting module 501 is further configured to: transmit second control signaling to the receiving terminal, where the second control signaling is used to indicate the receiving terminal to report the target CSI.

Optionally, the second control signaling is MAC signaling.

Optionally, the second control signaling includes at least one of the following:
first indication information for distinguishing different semi-persistent reports;
second indication information for distinguishing sidelinks;
a reported measurement range; and
a semi-persistent configuration identifier.

Optionally, the second control signaling includes at least one of the following:
second indication information for distinguishing sidelinks;
a reported measurement range; and
third indication information for distinguishing different aperiodic triggering state entries.

Optionally, the transmitting second control signaling to the receiving terminal includes:
receiving second control signaling transmitted by the network device; and
forwarding the second control signaling to the receiving terminal.

Optionally, the sidelink CSI configuration information includes a periodic reporting resource, and the periodic reporting resource is used for periodic CSI reporting or semi-persistent CSI reporting.

Optionally, the target CSI reported by the receiving terminal is carried in a MAC CE.

Optionally, the target CSI includes:
second indication information for distinguishing sidelinks;
a reported measurement range; and
reported CSI content.

The terminal provided in this embodiment of this disclosure can implement the processes implemented by the transmitting terminal of the sidelink transmission in the method embodiment in FIG. 2. To avoid repetition, details are not described herein again.

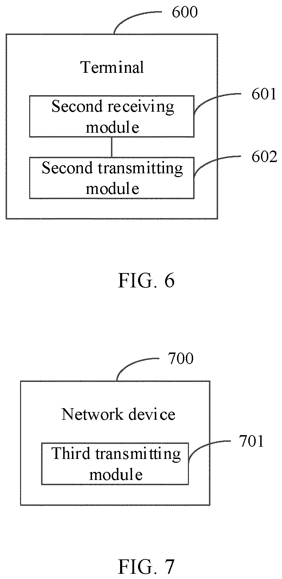

FIG. 6 is a structural diagram of a terminal according to an embodiment of this disclosure, where the terminal is a receiving terminal of a sidelink transmission. As shown in FIG. 6, the terminal 600 includes:
a second receiving module 601, configured to receive a PC5 radio resource control RRC message transmitted by a transmitting terminal of the sidelink transmission, where the PC5 radio resource control RRC message carries sidelink channel state information CSI configuration information; and
a second transmitting module 602, configured to report target CSI to the transmitting terminal based on the sidelink CSI configuration information.

Optionally, the terminal 600 further includes a second determining module, configured to receive second control signaling transmitted by the transmitting terminal, where the second control signaling is used to indicate the receiving terminal to report the target CSI.

Optionally, the second determining module is further configured to determine, based on the sidelink CSI configuration information, the reported target CSI; and
the second transmitting module 602 is further configured to: report the target CSI to the transmitting terminal based on an indication in the sidelink CSI configuration information or an indication in the second control signaling.

Optionally, the second control signaling is MAC signaling.

Optionally, the second control signaling includes at least one of the following:
first indication information for distinguishing different semi-persistent reports;
second indication information for distinguishing sidelinks;
a reported measurement range; and
a semi-persistent configuration identifier.

Optionally, the second control signaling includes at least one of the following:
second indication information for distinguishing sidelinks;
a reported measurement range; and
third indication information for distinguishing different aperiodic triggering state entries.

Optionally, the sidelink CSI configuration information includes a periodic reporting resource, and the periodic reporting resource is used for configuring periodic CSI reporting or semi-persistent CSI reporting.

Optionally, the target CSI is carried in a MAC CE.

Optionally, the target CSI includes:
second indication information for distinguishing sidelinks;
a reported measurement range; and
reported CSI content.

The terminal provided in this embodiment of this disclosure can implement the processes implemented by the receiving terminal of the sidelink transmission in the method embodiment in FIG. 3. To avoid repetition, details are not described herein again.

FIG. 7 is a structural diagram of a network device according to an embodiment of this disclosure, where the network device is a home network device of a transmitting terminal of a sidelink transmission. As shown in FIG. 7, the network device 700 includes:
a third transmitting module 701, configured to transmit sidelink channel state information CSI configuration information to a transmitting terminal of a sidelink transmission; where
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

Optionally, the sidelink CSI configuration information is carried in dedicated radio resource control RRC signaling or system information block SIB.

Optionally, the third transmitting module 701 is further configured to: transmit a Uu interface transmission parameter configuration to the transmitting terminal, where the Uu interface transmission parameter configuration is used by the transmitting terminal to report a target parameter for the target CSI to the network device.

Optionally, the third transmitting module 701 is further configured to: after the transmitting a Uu interface transmission parameter configuration to the transmitting terminal, receive the target CSI on a target resource forwarded by the transmitting terminal based on the Uu interface transmission parameter configuration.

Optionally, the target resource is any one of the following:
a periodically pre-allocated resource;
a resource for transmission of first control signaling indication by the network device by using layer-1 signaling or medium access control; and
a resource for an uplink scheduling request.

Optionally, the third transmitting module is further configured to:
transmit second control signaling to the transmitting terminal, where the second control signaling is used to indicate the receiving terminal to report the target CSI.

Optionally, the second control signaling is MAC signaling.

Optionally, the second control signaling includes at least one of the following:
first indication information for distinguishing different semi-persistent reports;
second indication information for distinguishing sidelinks;
a reported measurement range; and
a semi-persistent configuration identifier.

Optionally, the second control signaling includes at least one of the following:
second indication information for distinguishing sidelinks;
a reported measurement range; and
third indication information for distinguishing different aperiodic triggering state entries.

Optionally, the sidelink CSI configuration information includes a periodic reporting resource, and the periodic reporting resource is used for periodic CSI reporting or semi-persistent CSI reporting.

The terminal provided in this embodiment of this disclosure can implement the processes implemented by the network device in the method embodiment of FIG. 4. To avoid repetition, details are not described herein again.

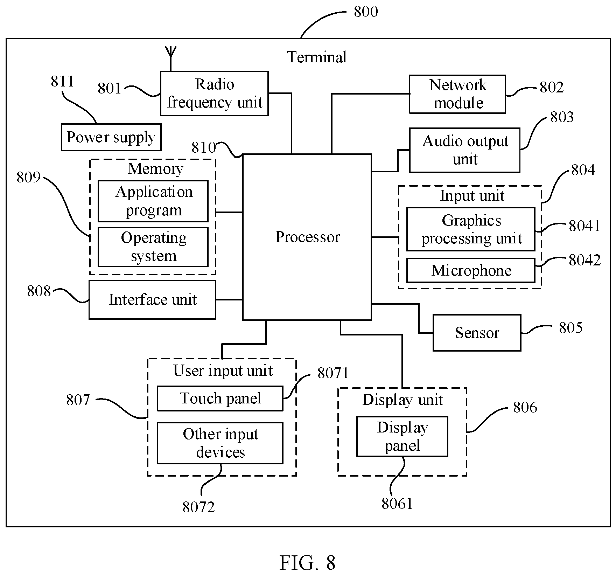

FIG. 8 is a schematic diagram of a hardware structure of a terminal for implementing the embodiments of this disclosure.

The terminal 800 includes but is not limited to components such as a radio frequency unit 801, a network module 802, an audio output unit 803, an input unit 804, a sensor 805, a display unit 806, a user input unit 807, an interface unit 808, a memory 809, a processor 810, and a power supply 811. A person skilled in the art may understand that the terminal structure shown in FIG. 8 does not constitute a limitation on the terminal. The terminal may include more or fewer components than those shown in the figure, or a combination of some components, or the components disposed differently. In this embodiment of this disclosure, the terminal includes but is not limited to a mobile phone, a tablet computer, a laptop computer, a palmtop computer, a vehiclemounted terminal, a wearable device, and a pedometer.

The radio frequency unit 801 is configured to transmit a PC5 radio resource control RRC message to a receiving terminal of the sidelink transmission, where the PC5 radio resource control RRC message carries sidelink CSI configuration information; and receive target CSI reported by the receiving terminal based on the sidelink CSI configuration information.

Alternatively, the radio frequency unit 801 is configured to receive a PC5 radio resource control RRC message transmitted by a transmitting terminal of the sidelink transmission, where the PC5 radio resource control RRC message carries sidelink CSI configuration information; and report target CSI to the transmitting terminal based on the sidelink CSI configuration information.

It should be understood that in this embodiment, the processor 810 and the radio frequency unit 801 can implement the processes implemented by the terminal in the method embodiments shown in FIG. 2 and FIG. 3. To avoid repetition, details are not described herein again.

It should be understood that, in this embodiment of this disclosure, the radio frequency unit 801 may be configured to transmit or receive a signal in an information transmitting/receiving or call process. Specifically, the radio frequency unit 801 receives downlink data from a base station, transmits the downlink data to the processor 810 for processing, and transmits uplink data to the base station. Generally, the radio frequency unit 801 includes but is not limited to an antenna, at least one amplifier, a transceiver, a coupler, a low noise amplifier, a duplexer, and the like. In addition, the radio frequency unit 801 may further communicate with a network and another device by using a wireless communications system.

The terminal provides a user with wireless broadband Internet access by using the network module 802, for example, helping the user to receive and send e-mails, browse web pages, and access streaming media.

The audio output unit 803 may convert audio data received by the radio frequency unit 801 or the network module 802 or stored in the memory 809 into an audio signal and output the audio signal as a sound. In addition, the audio output unit 803 may further provide audio output (for example, a call signal reception tone or a message reception tone) that is related to a specific function performed by the terminal 800. The audio output unit 803 includes a speaker, a buzzer, a receiver, and the like.

The input unit 804 is configured to receive an audio signal or a video signal. The input unit 804 may include a graphics processing unit (Graphics Processing Unit, GPU) 8041 and a microphone 8042. The graphics processing unit 8041 processes image data of a static picture or a video obtained by an image capture apparatus (for example, a camera) in an image capture mode or a video capture mode. A processed image frame may be displayed on the display unit 806. The image frame processed by the graphics processing unit 8041 may be stored in the memory 809 (or another storage medium) or transmitted by using the radio frequency unit 801 or the network module 802. The microphone 8042 is capable of receiving sounds and processing such sounds into audio data. The processed audio data can be converted into a format output that can be transmitted to a mobile communication base station through the radio frequency unit 801 in a telephone call mode.

The terminal 800 further includes at least one sensor 805, for example, an optical sensor, a motion sensor, and other sensors. Specifically, the optical sensor may include an ambient light sensor and a proximity sensor. The ambient light sensor may adjust luminance of the display panel 8061 based on brightness of ambient light. The proximity sensor may turn off the display panel 8061 and/or backlight when the terminal 800 moves to an ear. As a motion sensor, an accelerometer sensor may detect a value of an acceleration in various directions (there are usually three axes), may detect a value and a direction of gravity when the terminal is still, and may be configured to recognize a posture of the terminal (for example, landscape/portrait mode switching, a related game, or magnetometer posture calibration), provide a function related to vibration recognition (for example, a pedometer or a keystroke), or the like. The sensor 805 may further include a fingerprint sensor, a pressure sensor, an iris sensor, a molecular sensor, a gyroscope, a barometer, a hygrometer, a thermometer, or an infrared sensor. Details are not described herein.

The display unit 806 is configured to display information input by the user or information provided to the user. The display unit 806 may include the display panel 8061. The display panel 8061 may be configured in a form of a liquid crystal display (Liquid Crystal Display, LCD), an organic light-emitting diode (Organic Light-Emitting Diode, OLED), or the like.

The user input unit 807 may be configured to receive input digit or character information, and generate key signal input associated with user settings and function control of the terminal. Specifically, the user input unit 807 includes a touch panel 8071 and other input devices 8072. The touch panel 8071, also referred to as a touchscreen, may capture a touch operation performed by a user on or near the touch panel (for example, an operation performed by the user on the touch panel 8071 or near the touch panel 8071 by using a finger or any appropriate object or accessory such as a stylus). The touch panel 8071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, transmits the contact coordinates to the processor 810, receives a command transmitted by the processor 810, and executes the command. In addition, the touch panel 8071 may be implemented in a plurality of forms, for example, as a resistive, capacitive, infrared, or surface acoustic wave touch panel. In addition to the touch panel 8071, the user input unit 807 may further include other input devices 8072. Specifically, the other input devices 8072 may include but are not limited to a physical keyboard, a function key (such as a volume control key or a switch key), a trackball, a mouse, and a joystick. Details are not described herein.

Further, the touch panel 8071 may cover the display panel 8061. When detecting a touch operation on or near the touch panel 8071, the touch panel 8071 transmits the touch operation to the processor 810 to determine a type of a touch event. Then, the processor 810 provides a corresponding visual output on the display panel 8061 based on the type of the touch event. In FIG. 8, the touch panel 8071 and the display panel 8061 serve as two independent components to implement input and output functions of the terminal. However, in some embodiments, the touch panel 8071 and the display panel 8061 may be integrated to implement the input and output functions of the terminal. This is not specifically limited herein.

The interface unit 808 is an interface between an external apparatus and the terminal 800. For example, the external apparatus may include a wired or wireless headphone port, an external power (or battery charger) port, a wired or wireless data port, a memory card port, a port for connecting an apparatus with an identification module, an audio input/output (I/O) port, a video I/O port, or an earphone port. The interface unit 808 may be configured to receive an input (for example, data information or power) from the external apparatus and transmit the received input to one or more elements within the terminal 800, or may be configured to transmit data between the terminal 800 and the external apparatus.

The memory 809 may be configured to store software programs and various data. The memory 809 may mainly include a program storage region and a data storage region. The program storage region may store an operating system, an application program required by at least one function (for example, an audio play function or an image play function), and the like. The data storage region may store data (for example, audio data and a phone book) created based on usage of the mobile phone. In addition, the memory 809 may include a high-speed random access memory, and may further include a non-volatile memory such as a disk storage device, a flash memory device, or another volatile solid-state storage device.

The processor 810 is a control center of the terminal, and is connected to all components of the terminal by using various interfaces and lines. By running or executing software programs and/or modules that are stored in the memory 809 and calling data stored in the memory 809, the processor 810 executes various functions of the terminal and processes data, so as to perform overall monitoring on the terminal. The processor 810 may include one or more processing units. Preferably, the processor 810 may integrate an application processor and a modem processor. The application processor mainly processes the operating system, a user interface, an application program, and the like. The modem processor mainly processes wireless communication. It can be understood that the modem processor may alternatively be not integrated into the processor 810.

The terminal 800 may further include the power supply 811 (such as a battery) supplying power to each component. Preferably, the power supply 811 may be logically connected to the processor 810 by using a power management system, so that functions such as charge and discharge management and power consumption management are implemented by using the power management system.

In addition, the terminal 800 includes some functional modules that are not shown. Details are not described herein.

Preferably, an embodiment of this disclosure further provides a terminal, including a processor 810, a memory 809, and a computer program stored in the memory 809 and capable of running on the processor 810. When the computer program is executed by the processor 810, the processes of the foregoing embodiments of the method for controlling sidelink channel state information CSI reporting applied to a transmitting terminal of a sidelink transmission and the method for reporting sidelink channel state information CSI applied to a receiving terminal of a sidelink transmission are implemented, with the same technical effects achieved. To avoid repetition, details are not described herein again.

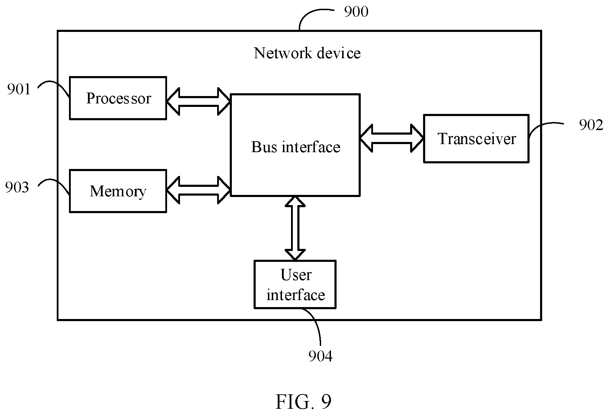

FIG. 9 is a structural diagram of another network device according to an embodiment of this disclosure. As shown in FIG. 9, the network device 900 includes a processor 901, a transceiver 902, a memory 903, and a bus interface.

The transceiver 902 is configured to transmit sidelink CSI configuration information to a transmitting terminal of a sidelink transmission; where
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

It should be understood that in this embodiment, the processor 901 and the transceiver 902 can implement the processes implemented by the network device in the method embodiments shown in FIG. 4. To avoid repetition, details are not described herein again.

In FIG. 9, a bus architecture may include any number of interconnected buses and bridges, and specifically connect together various circuits of one or more processors represented by the processor 901 and a memory represented by the memory 903. The bus architecture may further interconnect various other circuits such as a peripheral device, a voltage regulator, and a power management circuit. These are all well known in the art, and therefore are not further described in this specification. The bus interface provides an interface. The transceiver 902 may be a plurality of components, including a transmitter and a receiver, and provides units for communicating with a variety of other apparatuses on a transmission medium. For different user equipment, the user interface 904 may also be an interface capable of externally or internally connecting a required device, and the connected device includes but is not limited to a keypad, a display, a speaker, a microphone, a joystick, and the like.

The processor 901 is responsible for management of the bus architecture and general processing, and the memory 903 may store data for use by the processor 901 when the processor 901 performs an operation.

Preferably, an embodiment of this disclosure further provides a network device, including a processor 901, a memory 903, and a computer program stored in the memory 903 and capable of running on the processor 901. When the computer program is executed by the processor 901, the processes of the embodiments of the method for controlling sidelink channel state information CSI reporting applied to a network device side are implemented, with the same technical effects achieved. To avoid repetition, details are not described herein again.

An embodiment of this disclosure further provides a computer-readable storage medium. The computer-readable storage medium stores a computer program, and when the computer program is executed by a processor, the processes of the embodiments of the method for controlling sidelink channel state information CSI reporting applied to a transmitting terminal side provided in the embodiments of this disclosure are implemented, or when the computer program is executed by a processor, the processes of the embodiments of the method for controlling sidelink channel state information CSI applied to a receiving terminal side provided in the embodiments of this disclosure are implemented, or when the computer program is executed by a processor, the processes of the embodiments of the method for controlling sidelink channel state information CSI reporting applied to a network device side provided in the embodiments of this disclosure are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, or an optical disc.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a ..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially, or the part contributing to the related technologies may be implemented in a form of a software product. The computer software product is stored in a storage medium (for example, a ROM/RAM, a magnetic disk, or an optical disc), and includes a plurality of instructions for instructing a terminal (which may be a mobile phone, a computer, a server, an air conditioner, a base station, or the like) to perform the methods described in the embodiments of this disclosure.

The embodiments of this disclosure are described above with reference to the accompanying drawings, but this disclosure is not limited to the foregoing specific implementations. The foregoing specific implementations are merely exemplary instead of restrictive. Under enlightenment of this disclosure, a person of ordinary skills in the art may make many forms without departing from the aims of this disclosure and the protection scope of claims, all of which fall within the protection of this disclosure.

## Claims

1. A method for controlling sidelink channel state information CSI reporting, applied to a transmitting terminal of a sidelink transmission and comprising:
transmitting a PC5 radio resource control RRC message to a receiving terminal of the sidelink transmission, wherein the PC5 radio resource control RRC message carries sidelink CSI configuration information; and
receiving target CSI reported by the receiving terminal based on the sidelink CSI configuration information.

2. The method according to claim 1, wherein before the transmitting a PC5 radio resource control RRC message to a receiving terminal of the sidelink transmission, the method further comprises:
determining the sidelink CSI configuration information according to pre-configured information or protocol definition; or
receiving the sidelink CSI configuration information transmitted by a network device.

3. The method according to claim 2, wherein the receiving the sidelink CSI configuration information transmitted by a network device comprises:
receiving the sidelink CSI configuration information transmitted by the network device by using dedicated radio resource control RRC signaling or system information block SIB.

4. The method according to claim 1, wherein after the receiving target CSI reported by the receiving terminal based on the sidelink CSI configuration information, the method further comprises:
forwarding the target CSI on a target resource to a network device based on a Uu interface transmission parameter configuration transmitted by the network device.

5. The method according to claim 4, wherein the target resource is any one of the following:
a periodically pre-allocated resource;
a resource indicated by the network device by using first control signaling, wherein the first control signaling is layer-1 signaling or medium access control MAC signaling; and
a resource for an uplink scheduling request.

6. The method according to claim 1, wherein before the receiving target CSI reported by the receiving terminal based on the sidelink CSI configuration information, the method further comprises:
transmitting second control signaling to the receiving terminal, wherein the second control signaling is used to indicate the receiving terminal to report the target CSI.

7. The method according to claim 6, wherein the second control signaling is MAC signaling.

8. The method according to claim 7, wherein the second control signaling comprises at least one of the following:
first indication information for distinguishing different semi-persistent reports;
second indication information for distinguishing sidelinks;
a reported measurement range; and
a semi-persistent configuration identifier.

9. The method according to claim 7, wherein the second control signaling comprises at least one of the following:
second indication information for distinguishing sidelinks;
a reported measurement range; and
third indication information for distinguishing different aperiodic triggering state entries.

10. The method according to claim 6, wherein the transmitting second control signaling to the receiving terminal comprises:
receiving second control signaling transmitted by the network device; and
forwarding the second control signaling to the receiving terminal.

11. The method according to claim 1, wherein the sidelink CSI configuration information comprises a periodic reporting resource, and the periodic reporting resource is used for periodic CSI reporting or semi-persistent CSI reporting.

12. The method according to claim 1, wherein the target CSI reported by the receiving terminal is carried in a MAC CE.

13. The method according to claim 1, wherein the target CSI comprises:
second indication information for distinguishing sidelinks;
a reported measurement range; and
reported CSI content.

14. A method for reporting sidelink channel state information CSI, applied to a receiving terminal of a sidelink transmission and comprising:
receiving a PC5 radio resource control RRC message transmitted by a transmitting terminal of the sidelink transmission, wherein the PC5 radio resource control RRC message carries sidelink CSI configuration information; and
reporting target CSI to the transmitting terminal based on the sidelink CSI configuration information.

15. The method according to claim 14, further comprising:
receiving second control signaling transmitted by the transmitting terminal, wherein the second control signaling is used to indicate the receiving terminal to report the target CSI.

16. The method according to claim 15, wherein the reporting target CSI to the transmitting terminal based on the sidelink CSI configuration information comprises:
determining, based on the sidelink CSI configuration information, the reported target CSI; and
reporting the target CSI to the transmitting terminal based on an indication in the sidelink CSI configuration information or an indication in the second control signaling.

17. The method according to claim 15, wherein the second control signaling is MAC signaling.

18. The method according to claim 15, wherein the second control signaling comprises at least one of the following:
first indication information for distinguishing different semi-persistent reports;
second indication information for distinguishing sidelinks;
a reported measurement range; and
a semi-persistent configuration identifier.

19. The method according to claim 15, wherein the second control signaling comprises at least one of the following:
second indication information for distinguishing sidelinks;
a reported measurement range; and
third indication information for distinguishing different aperiodic triggering state entries.

20. The method according to claim 14, wherein the sidelink CSI configuration information comprises a periodic reporting resource, and the periodic reporting resource is used for configuring periodic CSI reporting or semi-persistent CSI reporting.

21. The method according to claim 14, wherein the target CSI is carried in a MAC CE.

22. The method according to claim 14, wherein the target CSI comprises:
second indication information for distinguishing sidelinks;
a reported measurement range; and
reported CSI content.

23. A method for controlling sidelink channel state information CSI reporting, applied to a network device and comprising:
transmitting sidelink CSI configuration information to a transmitting terminal of a sidelink transmission; wherein
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

24. The method according to claim 23, wherein the sidelink CSI configuration information is carried in dedicated radio resource control RRC signaling or system information block SIB.

25. The method according to claim 23, further comprising:
transmitting a Uu interface transmission parameter configuration to the transmitting terminal, wherein the Uu interface transmission parameter configuration is used by the transmitting terminal to report a target parameter for the target CSI to the network device.

26. The method according to claim 25, wherein after the transmitting a Uu interface transmission parameter configuration to the transmitting terminal, the method further comprises:
receiving the target CSI on a target resource forwarded by the transmitting terminal based on the Uu interface transmission parameter configuration.

27. The method according to claim 26, wherein the target resource is any one of the following:
a periodically pre-allocated resource;
a resource for transmission of first control signaling indication by the network device by using layer-1 signaling or medium access control signaling; and
a resource for an uplink scheduling request.

28. The method according to claim 23, further comprising:
transmitting second control signaling to the transmitting terminal, wherein the second control signaling is used to indicate the receiving terminal to report the target CSI.

29. The method according to claim 28, wherein the second control signaling is MAC signaling.

30. The method according to claim 28, wherein the second control signaling comprises at least one of the following:
first indication information for distinguishing different semi-persistent reports;
second indication information for distinguishing sidelinks;
a reported measurement range; and
a semi-persistent configuration identifier.

31. The method according to claim 28, wherein the second control signaling comprises at least one of the following:
second indication information for distinguishing sidelinks;
a reported measurement range; and
third indication information for distinguishing different aperiodic triggering state entries.

32. The method according to claim 23, wherein the sidelink CSI configuration information comprises a periodic reporting resource, and the periodic reporting resource is used for periodic CSI reporting or semi-persistent CSI reporting.

33. A terminal, wherein the terminal is a transmitting terminal of a sidelink transmission and comprises:
a first transmitting module, configured to transmit a PC5 radio resource control RRC message to a receiving terminal of the sidelink transmission, wherein the PC5 radio resource control RRC message carries sidelink channel state information CSI configuration information; and
a first receiving module, configured to receive target CSI reported by the receiving terminal based on the sidelink CSI configuration information.

34. The terminal according to claim 33, further comprising:
a first determining module, configured to determine the sidelink CSI configuration information according to pre-configured information or protocol definition; or
the first receiving module, further configured to receive the sidelink CSI configuration information transmitted by a network device.

35. The terminal according to claim 34, wherein
the first receiving module is further configured to: receive the sidelink CSI configuration information transmitted by the network device by using dedicated radio resource control RRC signaling or system information block SIB.

36. The terminal according to claim 33, wherein
the first transmitting module is further configured to: forward the target CSI on a target resource to a network device based on a Uu interface transmission parameter configuration transmitted by the network device.

37. The terminal according to claim 33, wherein
the first transmitting module is further configured to: transmit second control signaling to the receiving terminal, wherein the second control signaling is used to indicate the receiving terminal to report the target CSI.

38. The terminal according to claim 37, wherein the transmitting second control signaling to the receiving terminal comprises:
receiving second control signaling transmitted by the network device; and
forwarding the second control signaling to the receiving terminal.

39. A terminal, wherein the terminal is a receiving terminal of a sidelink transmission and comprises:
a second receiving module, configured to receive a PC5 radio resource control RRC message transmitted by a transmitting terminal of the sidelink transmission, wherein the PC5 radio resource control RRC message carries sidelink channel state information CSI configuration information; and
a second transmitting module, configured to report target CSI to the transmitting terminal based on the sidelink CSI configuration information.

40. The terminal according to claim 39, further comprising:
a second determining module, configured to receive second control signaling transmitted by the transmitting terminal, wherein the second control signaling is used to indicate the receiving terminal to report the target CSI.

41. The terminal according to claim 40, wherein
the second determining module is further configured to determine, based on the sidelink CSI configuration information, the reported target CSI; and
the second transmitting module is further configured to: report the target CSI to the transmitting terminal based on an indication in the sidelink CSI configuration information or an indication in the second control signaling.

42. A network device, comprising:
a third transmitting module, configured to transmit sidelink channel state information CSI configuration information to a transmitting terminal of a sidelink transmission; wherein
when the sidelink CSI configuration information is transmitted to the transmitting terminal, the transmitting terminal forwards, by using a PC5 radio resource control RRC message, the sidelink CSI configuration information to a receiving terminal of the sidelink transmission, and the sidelink CSI configuration information is used by the receiving terminal to report target CSI.

43. The network device according to claim 42, wherein the third transmitting module is further configured to: transmit a Uu interface transmission parameter configuration to the transmitting terminal, and the Uu interface transmission parameter configuration is used by the transmitting terminal to report a target parameter for the target CSI to the network device.

44. The network device according to claim 43, wherein the third transmitting module is further configured to: after the transmitting a Uu interface transmission parameter configuration to the transmitting terminal, receive the target CSI on a target resource forwarded by the transmitting terminal based on the Uu interface transmission parameter configuration.

45. The network device according to claim 42, wherein the third transmitting module is further configured to: transmit second control signaling to the transmitting terminal, and the second control signaling is used to indicate the receiving terminal to report the target CSI.

46. A terminal, comprising a memory, a processor, and a program stored in the memory and capable of running on the processor, wherein when the program is executed by the processor, the steps of the method for controlling sidelink channel state information CSI reporting according to any one of claims 1 to 13 are implemented, or the steps of the method for reporting sidelink channel state information CSI according to any one of claims 14 to 22 are implemented.

47. A network device, comprising a memory, a processor, and a program stored in the memory and capable of running on the processor, wherein when the program is executed by the processor, the steps of the method for controlling sidelink channel state information CSI reporting according to any one of claims 23 to 32 are implemented.

48. A computer-readable storage medium, wherein the computer-readable storage medium stores a computer program, and when the computer program is executed by a processor, the steps of the method for controlling sidelink channel state information CSI reporting according to any one of claims 1 to 13 and claims 23 to 32 are implemented; or when the computer program is executed by a processor, the steps of the method for reporting sidelink channel state information CSI according to any one of claims 14 to 22 are implemented.
